# EUROPEAN PATENT SPECIFICATION

(11) **EP 3 340 534 B1**
(45) Date of publication and mention of the grant of the patent: **20.01.2021**
(21) Application number: 16290240.7
(22) Date of filing: 20.12.2016
(51) Int. Cl.: H04L 12/24, H04L 12/26

(54) **A LOCAL SDN CONTROLLER AND CORRESPONDING METHOD OF PERFORMING NETWORK CONTROL AND MANAGEMENT FUNCTIONS**
LOKALES SDN-STEUERGERÄT UND ZUGEHÖRIGES VERFAHREN ZUR DURCHFÜHRUNG VON NETZWERKSTEUERUNGS- UND -VERWALTUNGSFUNKTIONEN
CONTRÔLEUR SDN LOCALET PROCÉDÉ CORRESPONDANT PERMETTANT D'EXÉCUTER DES FONCTIONS DE COMMANDE ET DE GESTION DE RÉSEAU

(43) Date of publication of application: 27.06.2018
(73) Proprietor: Alcatel Lucent, 91620 Nozay (FR)
(72) Inventor: Perez Caparros, David, 2018 Antwerpen (BE); Justen, Pascal Marie Edouard Julien, 2018 Antwerpen (BE); Cautareels, Paul Henri Marie, 2018 Antwerpen (BE)
(74) Representative: IP HILLS NV

(56) References cited:
- EP-A1- 2 884 694
- WO-A2-03/038616
- CN-A- 105 636 172
- OTHMANE BLIAL ET AL: "An Overview on SDN Architectures with Multiple Controllers", JOURNAL OF COMPUTER NETWORKS AND COMMUNICATIONS, vol. 2016, 27 April 2016 (2016-04-27), pages 1-8, XP055357695, US ISSN: 2090-7141, DOI: 10.1155/2016/9396525

## Description

### Technical Field

The present invention generally relates to Software Defined Network controllers that perform network control and management functions in communication networks. Such Software Defined Network controllers are also called SDN controllers. Examples of network control and management functions performed by such SDN controllers are network topology discovery, traffic engineering, network path computation, etc.

### Background

In the Internet of Things or loT, massive numbers of devices become connected to the Internet, like sensors, household appliances, etc. The large amount of devices introduces new challenges with respect to network control and management, and data processing.

Existing cloud data storage and processing models are not designed for the volume and variety of data generated by the loT, neither are they adapted to the velocity at which these data are generated in the loT. Next generation cloud data storage and processing models therefore are expected to extend cloud systems to be closer to the loT devices, i.e. closer to the edge of communication networks. Preprocessing data at the edge of communication networks or taking control and management decisions at the edge of communication networks has several benefits such as reduced bandwidth consumption and reduced latency.

In general, however, the closer network management and control functions are brought to the edge of communication networks, the more the cloud nodes become resource constrained, for instance as a result of more stringent space, power and cooling limitations at the edge of communication networks. Foreseeing the amount of resources that applications processing loT data and functions controlling the local loT network need, is unfeasible.

The article "An Overview on SDN Architectures with Multiple Controllers" from the authors Othmane Blial et al, published on 27 April 2016 in the Journal of Computer Networks and Communications, vol. 2016, pages 1-8, describes a multi-controller SDN with distributed architecture (local SDN controllers and a central SDN controller) in Section 3. Section 1 further mentions the problem of scalability, reliability, availability and efficiency of existing (non-distributed) SDNs.

European Patent Application EP 2 844 694 A1 and Chinese Patent Application CN 105 636 172 A also describe such distributed architectures for an SDN: local SDN controllers and a central SDN controller.

International patent application WO 03/038616 A2 is not directed to SDN controllers but more generally to resource-constrained network devices, and teaches that efficiency is improved in distributed networks with resource constraints when local resource consumption by software programs is monitored and tasks are offloaded to a central processor in case of resource shortage locally.

### Summary

It is an objective to enable bringing SDN controllers closer to the edge of communication networks, for instance to the loT gateway at the edge, and to execute network management and control functions in the more heterogeneous, resource constrained environment that the loT represents.

Embodiments of the invention thereto disclose a local Software Defined Network controller, abbreviated local SDN controller, adapted to perform local network control and management functions in a resource constrained execution environment, the local SDN controller comprising:
- a resource monitor adapted to permanently monitor an amount of available resources in the resource constrained execution environment and to establish a shortage of a given type of resources in the resource constrained execution environment; and
- a function manager adapted to identify a non-critical function, i.e. non-critical for the correct functioning of the SDN controller, out of the local network control and management functions that can be deactivated and/or offloaded to a central SDN controller to release resources of the given type in the resource constrained execution environment wherein the function manager further comprises:
- a function monitor adapted to gather resource consumption information for each function; and
- an online profiler adapted to generate, in case the resource monitor establishes shortage of the given type of resources in the resource constrained execution environment, a list of functions out of the local network control and management functions consuming most resources of the given type of resources.

Thus, embodiments of the invention concern a local SDN controller that self-adapts to the resources exposed by the execution environment that is resource constrained. The self-adaptation of the local SDN controller results in certain network control and management functions being deactivated and/or offloaded to a central SDN controller. To select which network control and management functions will be offloaded to the central SDN controller, functions that consume resources of a given type that is missing are selected. The type of resource may for instance be memory, storage capacity, computational capacity, etc. Amongst those functions, the one(s) that can be deactivated and/or offloaded without criticalities is/are selected. To enable the self-adaptation of a local SDN controller in resource constrained environments, at least two components must be added to the traditional SDN controller architecture. Firstly, a resource monitor must constantly monitor the amount of available resources in the resource constrained environment, e.g. the edge cloud environment. The resource monitor establishes when resources of a given type are running short, i.e. it detects when there is a shortage of a certain type of resources. Secondly, a function manager verifies if there are non-critical functions, i.e. non-critical for the correct functioning of the SDN controller, such that these non-critical functions can be safely deactivated and/or offloaded to a central SDN controller to release the type of resources that is running short. The function manager thereto for instance may maintain a static list of functions ranked by criticality and select offload the least critical function according to that list to the central SDN controller in case of shortage of resources. As an example, the function manager may select the path computation engine that consumes too much CPU power and offload that function to a central SDN controller.

The function manager incorporates a component, a function monitor that gathers resource consumption information for each function running in the local SDN controller, and another component, an online profiler that uses the resource consumption information online collected by the function monitor to generate a list of functions consuming most resources of a given type in case of lack or shortage of that given type of resources. The online profiles shall for instance generate a list of functions ordered by CPU consumption if processing capacity is missing or running short. The local SDN controller now becomes able to cooperate with a central SDN controller and automatically offload functions that cannot be executed at the resource constrained execution environment during runtime based on criticality of the functions and the consumption of particular type(s) of resources by the functions, to thereby automatically self-adapt to the resource availability in the resource constrained execution environment.

Embodiments of the invention hence bring the advantage that SDN controllers can be executed at the edge of the cloud where execution environments are highly heterogeneous with different degrees of resource availability. The local SDN controller is able to cooperate with a central SDN controller and automatically offloads functions that cannot be executed at the resource constrained execution environment during runtime based on criticality of the functions, to automatically self-adapt to the resource availability in the resource constrained execution environment.

Embodiments of the local SDN controller according to the present invention, defined by claim 2, further comprise:
- a permission requestor adapted to request permission for deactivation of a non-critical function in the list to the central SDN controller before deactivating and/or offloading the non-critical function.

Indeed, in case coordination between the local SDN controller and central SDN controller is desired, permission shall be requested to the central SDN controller before any function is deactivated. This way, the central SDN controller can take over the selected function and the offloading from local SDN controller to central SDN controller takes place without service interruption. Hence, a graceful deactivation of the function becomes possible.

Embodiments of the local SDN controller according to the present invention, defined by claim 3, further comprise:
- a state manager adapted to maintain a function state for stateful functions performed in the resource constrained execution environment, and to transfer a current function state of the non-critical function in the list to the central SDN controller before deactivating and offloading the non-critical function.

Indeed, for stateful functions selected to be deactivated and offloaded to a central SDN controller in order to release resources of a certain type in the resource constrained environment, transfer of the function's current state from the local SDN controller to the central SDN controller may be needed. Embodiments of the local SDN controller according to the present invention therefore may comprise a state manager that maintains the current state of stateful functions, and transfers that current state to the central SDN controller when a non-critical stateful function is selected by the function manager for being deactivated and/or offloaded to the central SDN controller.

In embodiments of the local SDN controller according to the present invention defined by claim 4, the function manager further comprises:
- an offline profiler adapted to offline determine resource requirements for the local network control and management functions.

Thus, the function manager may incorporate a further component: an offline profiler that provides an offline estimation of the resource requirements for each function in the list of non-critical functions. The offline profiler contains static information on the resource requirements per function, i.e. a static list of functions ordered according to resource requirements based on the function specification. Thanks to the offline profiler, the function manager enables to offload functions according to two criteria: criticality of the function and consumption of the type of resource that is lacking as specified in the function specification.

In embodiments of the local SDN controller according to the present invention defined by claim 5, the function manager further comprises:
- an upload manager adapted to deactivate and upload the non-critical function at runtime from the local SDN controller to the central SDN controller.

Thus, the function manager may incorporate a further component: an upload manager that performs graceful deactivation or activation of a given network control and management function.

In embodiments of the local SDN controller according to the present invention defined by claim 6, the upload manager is further adapted to offload the non-critical function from the central SDN controller as soon as the resource monitor establishes sufficient resources of the given type in the resource constrained execution environment.

This way, a previously offloaded function can be loaded back into the local SDN controller given that there are enough resources again in the resource constrained execution environment at some point in time. The central SDN controller may use a controller-to-controller interface to monitor the state of the local SDN controller and decide when a function that was previously offloaded, is reloaded again into the local SDN controller.

In addition to a local SDN controller as defined by claim 1, embodiments of the present invention also concern a corresponding method of performing local network control and management functions in a resource constrained execution environment as defined by claim 7, the method comprising:
- permanently monitoring an amount of available resources in the resource constrained execution environment and establishing a shortage of a given type of resources in the resource constrained execution environment; and
- identifying a non-critical function, i.e. non-critical for the correct functioning of an SDN controller, out of the local network control and management functions that can be deactivated and/or offloaded from a local SDN controller to a central SDN controller to release resources of the given type in the resource constrained execution environment wherein identifying of a non-critical function further comprises:
- gathering resource consumption information for each function; and
- generating, in case shortage of the given type of resources in the resource constrained execution environment is established, a list of functions out of the local network control and management functions consuming most resources of the given type of resources.

### Brief Description of the Drawings

Fig. 1 illustrates the Internet of Things comprising an embodiment of the local SDN controller 101 according to the present invention;
Fig. 2 is a functional block scheme of the embodiment of the local SDN controller 101 of Fig. 1;
Fig. 3 is a flow diagram of an embodiment of the method for performing network control and management functions according to the present invention; and
Fig. 4 illustrates a computing system suitable for hosting the local SDN controller according to the present invention and suitable for implementing the method for performing network control and management functions according to the present invention.

### Detailed Description of Embodiment(s)

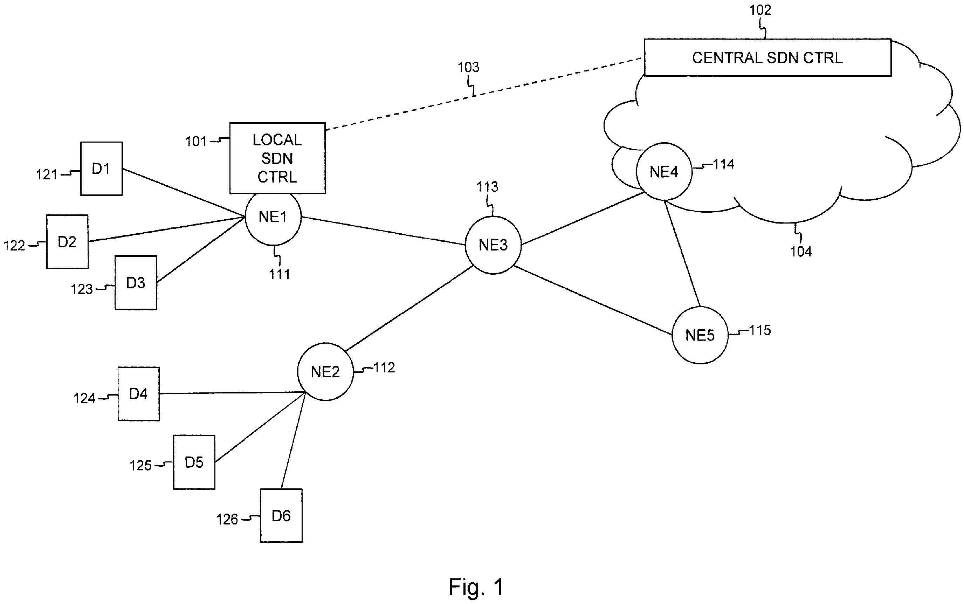

Fig. 1 shows the Internet of Things (loT) comprising a massive number of interconnected devices, six of which are drawn in Fig. 1: D1 or 121, D2 or 122, D3 or 123, D4 or 124, D5 or 125 and D6 or 126. Fig. 1 further shows a number of network elements that forward data: NE1 or 111, NE2 or 112, NE3 or 114, NE4 or 114 and NE5 or 115. Network element 111 represents an Internet of Things gateway hosting a local SDN controller 101 operating in line with embodiments of the present invention. Network element 114 represents a gateway to a cloud storage or processing system 104 that further hosts a central SDN controller 102. The local SDN controller 101 and central SDN controller 102 are coupled through a controller-to-controller interface 103, represented by a dashed line in Fig. 1.

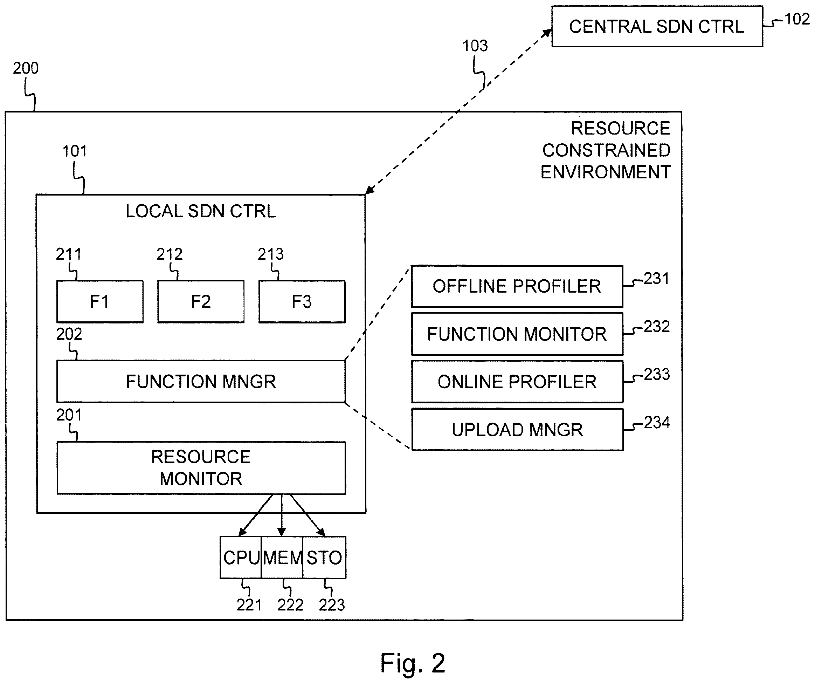

Fig. 2 shows the embodiment of the local SDN controller 101 of Fig. 1 in more detail. The local SDN controller 101 comprises a number of network control and management functions, three of which are drawn in Fig. 2: F1 or 211, F2 or 212 and F3 or 213. The local SDN controller 101 further comprises a resource monitor 201 and a function manager 202. The resource monitor 201 connects with a memory wherein the usage of certain types of resources by the network control and management functions F1-F3 is maintained. In the example of Fig. 2, the types of resources comprise the CPU power 221, memory occupancy 222 and storage capacity 223. Fig. 2 further shows that the function manager 202 comprises four components: an offline profiler 231, a function monitor 232, an online profiler 233, and an upload manager 234. The operation of the different components of the local SDN controller 101 will be described in more detail in the following paragraphs.

The local SDN controller 101 has an amount of functions F1-F3 or services, depending on the tasks that the local SDN controller 101 is expected to fulfill, e.g., a topology discovery service 211, a traffic engineering service 212, a path computation engine 213, etc. The amount of functions and the tasks fulfilled by these functions varies between SDN controllers. The local SDN controller 101 is deployed in a resource constrained execution environment 200 where some of the non-critical functions hosted by the local SDN controller 101, i.e. functions or services that are non-critical for the correct functioning of the local SDN controller 101, can be deactivated in order to save resources. An example of such non-critical function is the topology discovery service 211 in the local SDN controller 101.

The local SDN controller 101 further has two new components added to the traditional SDN controller architecture to enable self-adaptation to available resources in its resource constrained execution environment 200: the resource monitor 201 and the function manager 202. The resource monitor 201 constantly monitors the amount of available resources in its execution environment, e.g. the CPU consumption 221, the memory occupancy 222 and the used storage capacity 223. In case of lack of a given type of resources, e.g. computational power or CPU capacity, the function manager 202 lists the most resource consuming functions of that given type, either through offline or online estimation of the amount of resources of that given type by the different functions F1-F3. In the example of CPU capacity, the functions F1-F3 become ordered by CPU consumption. The function manager 202 thereupon checks if there is any non-critical function in the previous list of functions that can be safely deactivated to release the type of resources that is missing or running short. The offline profiler 231 provides an offline estimation of the resource requirements for each of the functions F1-F3, i.e. an estimation of the resource requirements based on the function specifications. In the example of Fig. 2 for instance, the function manager 202 establishes through its offline profiler 231 that the path computation engine F3 or 213 consumes too much CPU power according to its specifications whereas this is a non-critical function. Consequently, this function F3 can be offloaded to a central SDN controller, for instance SDN controller 102 in the situation of Fig. 1. The upload manager 234 performs a graceful deactivation of selected non-critical function(s) 213 at the local SDN controller 101 and activation of that same function 213 at the central SDN controller 102. The local SDN controller 101 will coordinate with the central SDN controller 102 and ask for permission before deactivating the path computation engine 213, such that the central SDN controller 102 can take over this function 213 without service disruption. A graceful shutdown of the function 213 is thus realized at the local SDN controller 101 thereby releasing CPU power in the resource constrained environment 200 of the local SDN controller 101. It is noticed that transfer of the current function state from the local SDN controller 101 to the central SDN controller 102 may be needed in case the function 213 selected to be deactivated is a stateful function. The function monitor232 further gathers effective resource consumption information for each function F1-F3 running in the local SDN controller 101. This online collected resource consumption information, when available, is used by the online profiler 233 to establish a list of functions ordered according to online measured consumption of resources of the type that is missing. In the example of Fig. 2 for instance, the function manager 202 establishes through its function monitor 232 and online profiler 233 that the topology discovery service F1 or 211 consumes most CPU power at a point in time where CPU power is missing, whereas this is a non-critical function. Consequently, this function F1 can be offloaded to a central SDN controller, for instance SDN controller 102 in the situation of Fig. 1. The upload manager 234 performs a graceful deactivation of the selected non-critical function 211 at the local SDN controller 101 and activation of that same function 211 at the central SDN controller 102. The local SDN controller 101 will coordinate with the central SDN controller 102 and ask for permission before deactivating the topology discovery service 211, such that the central SDN controller 102 can take over this function 211 without service disruption. A graceful shutdown of the function 211 is thus realized at the local SDN controller 101 thereby releasing CPU power in the resource constrained environment 200 of the local SDN controller 101. It is noticed that transfer of the current function state from the local SDN controller 101 to the central SDN controller 102 may be needed in case the function 211 selected to be deactivated is a stateful function.

It is noticed that in alternative embodiments of the present invention, no function monitor and online profiler may be foreseen such that the function manager can only rely on static information obtained from the offline profiler to select non-critical function(s) that will be offloaded to a central SDN controller. In further alternative embodiments, the static information available from the offline profiler may be combined with the online information collected by the function monitor, and the static estimation of resource consumption and real-time measured estimation of resource consumption of a given type may be combined, e.g. in a weighted sum, to establish a list of functions ordered according to resource consumption. That list may then serve as starting point to select non-critical function(s) that will be offloaded to the central SDN controller.

It is noticed that in an alternative embodiment, for very resource constrained devices where there is not enough place to store the proposed SDN controller functionality on chip (e.g. flash), it may even be possible to upload the functionality at runtime instead of activating/deactivating functions. The function could then be precompiled and run directly in RAM or through use of a generic lightweight virtual machine or some scripting language.

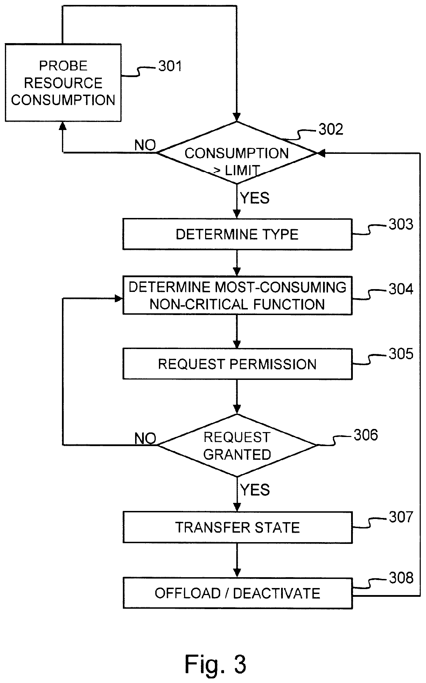

Fig. 3 illustrates the steps executed in an embodiment of the method to perform network control and management functions in a resource constrained execution environment according to the present invention. In step 301, a resource monitor 201 in a local SDN controller 101 probes certain resources in the resource constrained execution environment. In step 302, a function manager 202 in the local SDN controller 101 verifies if the consumption of resources of a certain type exceeds a certain limit. As long as this is not the case, the resource monitor 201 keeps probing the resources. As soon as the consumption of resources of a certain type exceeds a certain limit, the method moves to step 303 wherein the function manager 202 determines which type of resources is overloaded, e.g. computation power. Thereupon, the function manager 202 of the local SDN controller 101 checks in step 304 which non-critical functions are consuming most resources of the type that is overloaded. In step 305, the local SDN controller 101 requests permission to the central SDN controller 102 to deactivate a selected non-critical function and specifies that the reason for the request is a resource overloaded in the execution environment. The request is sent from the local SDN controller 101 to the central SDN controller 102 over the controller-to-controller interface 103. In step 306, the function manager 202 verifies if the request is granted by the central SDN controller 102. If this is not the case, the process returns to step 304 to select a different non-critical function that is consuming substantial resources of the type of resources that is overloaded. If on the contrary the request is granted by the central SDN controller 102, the local SDN controller 101 optionally transfers the latest function state to the central SDN controller 102 in step 307. This step is optional as it applies only to stateful functions or services, i.e. functions or services for which a state is maintained. Thereafter, in step 308, the function manager 202 offloads the function from the local SDN controller 101 to the central SDN controller 102, the central SDN controller 102 uploads the function and activates the function for execution. At the local SDN controller 101, the function is deactivated, and the method returns to step 302 to verify if there are still resources of a particular type that are overloaded in the resource constrained execution environment 200.

The above described invention is particularly advantageous when used in the Internet of Things (loT), where control and data aggregation from a high number of loT devices is likely to be done at the edge of the network. As loT networks become more popular, there will be a big variety of loT gateways in the market. SDN controllers, which may be commercialized as a Virtual Network Function (VNF), will need to adapt to different types of resource constrained execution environments in order to operate at the edge of the network. The present invention allows for executing an SDN controller at the very edge of the network, where execution environments are highly heterogeneus with different degrees of resource availability. The invention enables cooperation between a local SDN controller and a central SDN controller to offload the functions that cannot be executed at the resource constrained execution environment during runtime based on the resource availability considered per type of resource.

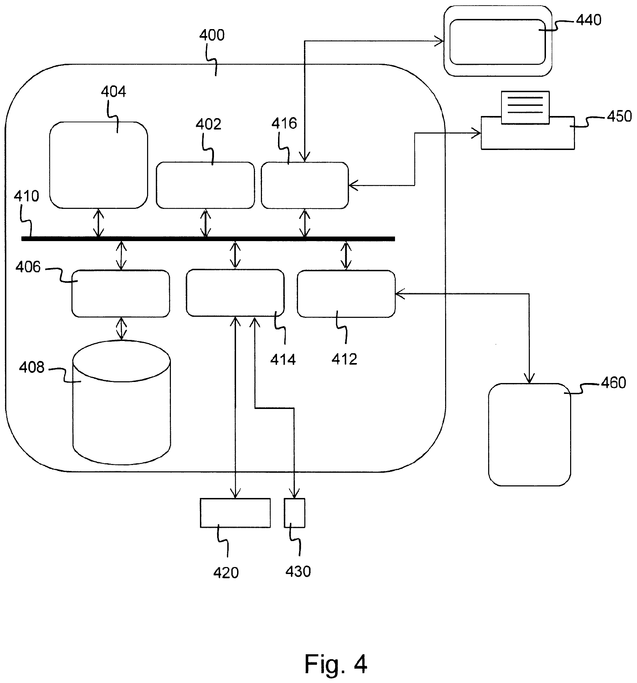

Fig. 4 shows a suitable computing system 400 for hosting the local SDN controller 101 according to the present invention and suitable for implementing the method for performing network control and management functions according to the present invention, embodiments of which are drawn in Fig. 2 and Fig. 3 respectively. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1Gb Ethernet interfaces that enables computing system 400 to communicate with other devices and/or systems, for example mechanisms for communicating with one or more other computing systems. The communication interface 412 of computing system 400 may be connected to such another computing system 460 by means of a local area network (LAN) or a wide area network (WAN), such as for example the internet, in which case the other computing system may for example comprise a suitable web server. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example 1 TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

The steps executed in the method of performing network control and management functions according to the present invention, illustrated by the above embodiments, may be implemented as programming instructions stored in local memory 404 of the computing system 400 for execution by its processor 402. Alternatively, the instructions may be stored on the storage element 408 or be accessible from another computing system through the communication interface 412.

The present embodiments are to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

## Claims

1. A local Software Defined Network controller (101), abbreviated local SDN controller, adapted to perform local network control and management functions (211, 212, 213) in a resource constrained execution environment (200), said local SDN controller (101) comprising:
- a resource monitor (201) adapted to permanently monitor an amount of available resources in said resource constrained execution environment (200) and to establish a shortage of a given type of resources in said resource constrained execution environment (200); and
- a function manager (202) adapted to identify a non-critical function (213), i.e. non-critical for the correct functioning of the SDN controller (101), out of said local network control and management functions (211, 212, 213) that can be deactivated and/or offloaded to a central SDN controller (102) to release resources of said given type in said resource constrained execution environment (200) wherein said function manager (202) further comprises:
- a function monitor (232) adapted to gather resource consumption information for each function (211, 212, 213); and
- an online profiler (233) adapted to generate, in case said resource monitor (201) establishes said shortage of said given type of resources in said resource constrained execution environment (200), a list of functions out of said local network control and management functions (211, 212, 213) consuming most resources of said given type of resources.

2. A local SDN controller (101) according to claim 1, further comprising:
- a permission requestor adapted to request permission for deactivation of said non-critical function (213) in said list to said central SDN controller (102) before deactivating and/or offloading said non-critical function (213).

3. A local SDN controller (101) according to claim 1, further comprising:
- a state manager adapted to maintain a function state for stateful functions performed in said resource constrained execution environment (200), and to transfer a current function state of said non-critical function (213) in said list to said central SDN controller (102) before deactivating and offloading said non-critical function (213).

4. A local SDN controller (101) according to claim 1, wherein said function manager (202) further comprises:
- an offline profiler (231) adapted to offline determine resource requirements for said local network control and management functions (211, 212, 213).

5. A local SDN controller (101) according to claim 1, wherein said function manager (202) further comprises:
- an upload manager (234) adapted to deactivate and upload said non-critical function (213) at runtime from said local SDN controller (101) to said central SDN controller (102).

6. A local SDN controller (101) according to claim 6, wherein said upload manager (234) further is adapted to offload said non-critical function (213) from said central SDN controller (102) as soon as said resource monitor (201) establishes sufficient resources of said given type in said resource constrained environment (200).

7. A method of performing local network control and management functions (211, 212, 213) in a resource constrained execution environment (200), said method comprising:
- permanently monitoring (301, 302, 303) an amount of available resources in said resource constrained execution environment (200) and establishing a shortage of a given type of resources in said resource constrained execution environment (200); and
- identifying (305, 306) a non-critical function, i.e. non-critical for the correct functioning of an SDN controller (101), out of said local network control and management functions (211, 212, 213) that can be deactivated and/or offloaded (307, 308) from a local SDN controller (101) to a central SDN controller (102) to release resources of said given type in said resource constrained execution environment (200), wherein said identifying of a non-critical function further comprises:
- gathering resource consumption information for each function (211, 212, 213); and
- generating, in case shortage of said given type of resources in said resource constrained execution environment (200) is established, a list of functions out of said local network control and management functions (211, 212, 213) consuming most resources of said given type of resources.

## Patentansprüche

1. Lokale softwaredefinierte Netzwerksteuerung (101), abgekürzt lokale SDN-Steuerung, die angepasst ist, lokale Netzwerksteuer- und -verwaltungsfunktionen (211, 212, 213) in einer ressourceneingeschränkten Ausführungsumgebung (200) durchzuführen, wobei die lokale SDN-Steuerung (101) Folgendes umfasst:
- einen Ressourcenüberwacher (201), der angepasst ist, eine Menge von verfügbaren Ressourcen in der ressourceneingeschränkten Ausführungsumgebung (200) permanent zu überwachen und einen Mangel an einem gegebenen Typ von Ressourcen in der ressourceneingeschränkten Ausführungsumgebung (200) herzustellen; und
- einen Funktionsverwalter (202), der angepasst ist, eine nichtkritische Funktion (213), d. h. nichtkritisch für das korrekte Funktionieren der SDN-Steuerung (101), der lokalen Netzwerksteuer- und -verwaltungsfunktionen (211, 212, 213) zu identifizieren, die deaktiviert und/oder zu einer zentralen SDN-Steuerung (102) ausgelagert werden kann, um Ressourcen des gegebenen Typs in der ressourceneingeschränkten Ausführungsumgebung (200) freizugeben, wobei der Funktionsverwalter (202) ferner Folgendes umfasst:
- einen Funktionsüberwacher (232), der angepasst ist, für jede Funktion (211, 212, 213) Ressourcenverbrauchsinformationen zu sammeln; und
- einen Onlineprofilierer (233), der in einem Fall, in dem der Ressourcenüberwacher (201) den Mangel am gegebenen Typ von Ressourcen in der ressourceneingeschränkten Ausführungsumgebung (200) herstellt, angepasst ist, aus den lokalen Netzwerksteuer-und -verwaltungsfunktionen (211, 212, 213) eine Liste von Funktionen zu erzeugen, die die meisten Ressourcen des gegebenen Typs von Ressourcen verbrauchen.

2. Lokale SDN-Steuerung (101) nach Anspruch 1, die ferner Folgendes umfasst:
- einen Zulassungsanforderer, der angepasst ist, eine Zulassung zur Deaktivierung der nichtkritischen Funktion (213) in der Liste zur zentralen SDN-Steuerung (102) anzufordern, bevor die nichtkritische Funktion (213) deaktiviert und/oder ausgelagert wird.

3. Lokale SDN-Steuerung (101) nach Anspruch 1, die ferner Folgendes umfasst:
- einen Zustandsverwalter, der angepasst ist, für zustandsbehaftete Funktionen, die in der ressourceneingeschränkten Ausführungsumgebung (200) durchgeführt werden, einen Funktionszustand zu erhalten und einen aktuellen Funktionszustand der nichtkritischen Funktion (213) in der Liste zur zentralen SDN-Steuerung (102) zu übertragen, bevor die nichtkritische Funktion (213) deaktiviert und ausgelagert wird.

4. Lokale SDN-Steuerung (101) nach Anspruch 1, wobei der Funktionsverwalter (202) ferner Folgendes umfasst:
- einen Offlineprofilierer (231), der angepasst ist, Ressourcenanforderungen für die lokalen Netzwerksteuer- und - verwaltungsfunktionen (211, 212, 213) offline zu bestimmen.

5. Lokale SDN-Steuerung (101) nach Anspruch 1, wobei der Funktionsverwalter (202) ferner Folgendes umfasst:
- einen Hochladungsverwalter (234), der angepasst ist, die nichtkritische Funktion (213) bei Laufzeit zu deaktivieren und von der lokalen SDN-Steuerung (101) zur zentralen SDN-Steuerung (102) hochzuladen.

6. Lokale SDN-Steuerung (101) nach Anspruch 6, wobei der Hochladungsverwalter (234) ferner angepasst ist, die nichtkritische Funktion (213) von der zentralen SDN-Steuerung (102) auszulagern, sowie der Ressourcenüberwacher (201) ausreichende Ressourcen des gegebenen Typs in der ressourceneingeschränkten Umgebung (200) herstellt.

7. Verfahren zum Durchführen von lokalen Netzwerksteuer-und -verwaltungsfunktionen (211, 212, 213) in einer ressourceneingeschränkten Ausführungsumgebung (200), wobei das Verfahren Folgendes umfasst:
- permanentes Überwachen (301, 302, 303) einer Menge von verfügbaren Ressourcen in der ressourceneingeschränkten Ausführungsumgebung (200) und Herstellen eines Mangels an einem gegebenen Typ von Ressourcen in der ressourceneingeschränkten Ausführungsumgebung (200); und
- Identifizieren (305, 306) einer nichtkritischen Funktion, d. h. nichtkritisch für das korrekte Funktionieren einer SDN-Steuerung (101), der lokalen Netzwerksteuer- und - verwaltungsfunktionen (211, 212, 213), die deaktiviert und/oder von einer lokalen SDN-Steuerung (101) zu einer zentralen SDN-Steuerung (102) ausgelagert (307, 308) werden können, um Ressourcen des gegebenen Typs in der ressourceneingeschränkten Ausführungsumgebung (200) freizugeben, wobei das Identifizieren einer nichtkritischen Funktion ferner Folgendes umfasst:
- Sammeln von Ressourcenverbrauchsinformationen für jede Funktion (211, 212, 213); und
- in einem Fall, in dem ein Mangel am gegebenen Typ von Ressourcen in der ressourceneingeschränkten Ausführungsumgebung (200) hergestellt ist, Erzeugen einer Liste von Funktionen aus den lokalen Netzwerksteuer- und -verwaltungsfunktionen (211, 212, 213), die die meisten Ressourcen des gegebenen Typs von Ressourcen verbrauchen.

## Revendications

1. Contrôleur de réseau défini par logiciel local (101), en abrégé contrôleur SDN local, conçu pour réaliser des fonctions de commande et de gestion de réseau local (211, 212, 213) dans un environnement d'exécution à ressources limitées (200), ledit contrôleur SDN local (101) comprenant :
- un élément de surveillance de ressources (201) conçu pour surveiller en permanence une quantité de ressources disponibles dans ledit environnement d'exécution à ressources limitées (200) et pour établir une pénurie d'un type donné de ressources dans ledit environnement d'exécution à ressources limitées (200) ; et
- un gestionnaire de fonction (202) conçu pour identifier une fonction non critique (213), c'est-à-dire non critique pour le fonctionnement correct du contrôleur SDN (101), parmi lesdites fonctions de commande et de gestion de réseau local (211, 212, 213), qui peut être désactivée et/ou déchargée vers un contrôleur SDN central (102) pour libérer des ressources dudit type donné dans ledit environnement d'exécution à ressources limitées (200) dans lequel ledit gestionnaire de fonction (202) comprend en outre :
- un élément de surveillance de fonction (232) conçu pour recueillir des informations de consommation de ressources pour chaque fonction (211, 212, 213) ; et
- un profileur en ligne (233) conçu pour générer, au cas où ledit élément de surveillance de ressources (201) établit ladite pénurie dudit type donné de ressources dans ledit environnement d'exécution à ressources limitées (200), une liste de fonctions parmi lesdites fonctions de commande et de gestion de réseau local (211, 212, 213) consommant le plus de ressources dudit type donné de ressources.

2. Contrôleur SDN local (101) selon la revendication 1, comprenant en outre :
- un requérant d'autorisation conçu pour requérir une autorisation pour la désactivation de ladite fonction non critique (213) dans ladite liste audit contrôleur SDN central (102) avant la désactivation et/ou le déchargement de ladite fonction non critique (213).

3. Contrôleur SDN local (101) selon la revendication 1, comprenant en outre :
- un gestionnaire d'état conçu pour maintenir un état de fonction pour des fonctions avec état réalisées dans ledit environnement d'exécution à ressources limitées (200), et pour transférer un état de fonction actuel de ladite fonction non critique (213) dans ladite liste audit contrôleur SDN central (102) avant la désactivation et le déchargement de ladite fonction non critique (213).

4. Contrôleur SDN local (101) selon la revendication 1, dans lequel ledit gestionnaire de fonction (202) comprend en outre :
- un profileur hors ligne (231) conçu pour déterminer hors ligne des besoins en ressources pour lesdites fonctions de commande et de gestion de réseau local (211, 212, 213).

5. Contrôleur SDN local (101) selon la revendication 1, dans lequel ledit gestionnaire de fonction (202) comprend en outre :
- un gestionnaire d'envoi (234) conçu pour désactiver et envoyer ladite fonction non critique (213) au moment de l'exécution, dudit contrôleur SDN local (101) audit contrôleur SDN central (102).

6. Contrôleur SDN local (101) selon la revendication 6, dans lequel ledit gestionnaire d'envoi (234) est en outre conçu pour décharger ladite fonction non critique (213) dudit contrôleur SDN central (102) dès que ledit élément de surveillance de ressources (201) établit des ressources suffisantes dudit type donné dans ledit environnement à ressources limitées (200).

7. Procédé de réalisation de fonctions de commande et de gestion de réseau local (211, 212, 213) dans un environnement d'exécution à ressources limitées (200), ledit procédé comprenant :
- la surveillance en permanence (301, 302, 303) d'une quantité de ressources disponibles dans ledit environnement d'exécution à ressources limitées (200) et l'établissement d'une pénurie d'un type donné de ressources dans ledit environnement d'exécution à ressources limitées (200) ; et
- l'identification (305, 306) d'une fonction non critique, c'est-à-dire non critique pour le fonctionnement correct d'un contrôleur SDN (101), parmi lesdites fonctions de commande et de gestion de réseau local (211, 212, 213), qui peut être désactivée et/ou déchargée (307, 308) d'un contrôleur SDN local (101) à un contrôleur SDN central (102) pour libérer des ressources dudit type donné dans ledit environnement d'exécution à ressources limitées (200), dans lequel ladite identification d'une fonction non critique comprend en outre :
- le recueil d'informations de consommation de ressources pour chaque fonction (211, 212, 213) ; et
- la génération, au cas où une pénurie dudit type donné de ressources dans ledit environnement d'exécution à ressources limitées (200) est établie, d'une liste de fonctions parmi lesdites fonctions de commande et de gestion de réseau local (211, 212, 213) consommant le plus de ressources dudit type donné de ressources.
